# EUROPEAN PATENT APPLICATION

(11) **EP 2 251 834 A1**
(43) Date of publication of application: **17.11.2010**
(21) Application number: 10005060.8
(22) Date of filing: 12.02.2007
(51) Int. Cl.: G07B 15/00, G06K 9/00

(54) **Method and means for delivering, handling and using coded information**

(30) Priority: 13.02.2006 SE 0600315; 08.01.2007 SE 0700070
(62) Divisional of application: 07709343.3
(71) Applicant: Weitman, Jacob, 182 63 Djursholm (SE)
(72) Inventor: Weitman, Jacob, 182 63 Djursholm (SE)

(57) **Abstract**

The present invention relates to a method and apparatus for delivering coded information using mobile phones with a display. The method is **characterized in that** said coded information comprises element codes, the elements of which are selected from character sets supported by short text messaging systems and disseminated by, but not limited to standard SMS distributed via SMCS. The element codes do not require EMS, MMS or other more complicated communication means and can therefore be simply and efficiently delivered to practically every mobile phone and be used for ticketing, couponing and access control purposes. Apparatus is provided for performing said method.

## Description

The invention as described herein and in my Swedish patent applications 0600315-6 of February 13, 2006 and 0700070-6 of January 8, 2007, from which priorities are claimed, is related to a method and an apparatus for delivering machine- and human-readable information to mobile phones with a display and for use of said information for applications such as ticketing, couponing and access control to restricted areas or facilities.

### BACKGROUND OF THE INVENTION

By the International Patent Applications with publication Nos. WO 2001/95267 and WO 2004/027662, as well as by the GB Patent Application No. GB2362012, methods for delivering tickets to mobile phones have been disclosed. However, the known methods have the considerable practical disadvantage that they require that one or two dimensional codes be used. Such codes cannot be sent using standard short text messaging protocols, which are supported by practically all mobile phones and networks. Rather, they require special image transmission techniques, such as EMS, Smart Messaging (by Nokia) and MMS or e-mail, which are not generally supported by mobile networks and phone handsets, in particular not in developing countries, are more expensive to use and demand larger data transmission capacities. MMS normally requires special settings in the mobile phones. In the case of EMS, knowledge is needed about the receiving party's particular phone model and its display characteristics. Such data can be stored in data bases, but with the rapid introduction of new mobile phone models and the proliferation of cheap models in developing countries, keeping the data bases fully updated is difficult. The one or two dimensional codes being the basis for prior art can normally not be read by standard retail and similar scanners, but rather require special scanners and are difficult to read on mobile phone displays, which may be dirty or scratched, making the reading of densely packed lines and bits rather difficult.

### THE OBJECT OF THE INVENTION

The object of the invention is to overcome the above mentioned problems and to provide a method which is applicable to practically all mobile phones in all operator networks, simple to adopt and cost effective to use. The concept of mobile phone as used hereinafter comprises all types of hand held mobile devices with a display, including but not limited to so called PDAs and Smartphones and using any type of wireless communication means.

### SUMMARY OF THE INVENTION

The stated object is achieved by a method and an apparatus according to the characterizing portions of claims 1 and 6, respectively.

The sub claims disclose preferable embodiments of the invention.

Mobile phone networks are designed to allow transmission of short text messages of the types described in the following. The displays of mobile phones are correspondingly capable of receiving and exhibiting standard short text messages, which may contain some coded information in the form of a set of letters and/or digits. The coded information, which is to be used by the receiving mobile phone as a ticket, a voucher, a discount coupon or a similar document entitling the holder to some goods or services or enabling the holder to take a measure, initiate an action or to activate a function, may without restriction also be supplemented by information as plain alphanumeric text. All such messages containing coded information using standard sets of short text messaging characters, including punctuation marks and spacing, will in the following be referred to as tickets.

The invention as described herein and in the priority document is based on the realization that communication by short text messaging services is extremely widely spread, is very cost effective and is supported by practically all mobile network operators and mobile phones. Consequently, a code suitable for universal usage and not dependant on knowledge of any particulars about the handsets to which the code is to be delivered, should be based on setups of characters and symbols supported by standard short text messaging services. A code of this type, as disclosed by the present invention, will be denoted an element code.

Although the advantages of the element code are most notable when used in context with standard short text messaging services such as SMS, SkyMail and ShortMail reviewed in the following, within the scope of the invention it is of course allowable to transmit the code by other protocols and means, such as EMS, Smart Messaging, MMS and e-mail.

### SHORT TEXT MESSAGING

Mobile originated and mobile terminated point-to-point and point-to-multipoint text based Short Message Services (SMS) were originally introduced as a functionality defined by several SMS protocols in the GSM system, but have now been expanded to a wide range of networks, including 3G and higher. Cell broadcast short text messaging allows messages to be sent to all mobiles in a specified geographical region. Receiving, storing and forwarding short text messages in mobile networks is accomplished via Short Message Service Centers (SMSC), using protocols such as SMPP (Short Message Peer-to-Peer).

Short text messaging is also implemented under other protocols than SMS, such as the Japanese SkyMail (by J-Phone) and Short Mail (by NTT DoCoMo). Short text messages can also be delivered via e-mail protocols such as SMTP over TCP/IP.

The payload of short messages transmitted over SMSC is determined by different protocols. Within the standard GSM MAP framework the payload is limited to 140 bytes (= 1120 bits). This allows 160 7-bit characters, 140 8-bit characters or 70 16-bit characters. As a consequence, using Roman characters encoded as 7-bit ASCII words, allows a message of 160 characters, whereas for instance Russian, Chinese, Korean or Japanese characters encoded by the 16-bit UCS-2 allows only 70 characters.

In cases, where the ticket sender wishes to add ancillary information to the ticket, such that the total message length exceeds the above limits on number of characters per message, the content can be segmented over multiple concatenated messages. As the segmentation information uses up 48 bits, the actual payload of each segmented message will be shorter, for instance only 67 characters for 16-bit characters.

For widest applicability, the element code shall thus preferably be shorter than 67 characters. However, the displays of most mobile phones will not allow the simultaneous presentation of a code this size. The size of the element code according to the invention shall therefore preferably be limited in terms of number of rows and number of characters per row such, that the code can be exhibited in its entirety on the vast majority of all mobile phone displays. By this, the display with the entire code can be presented to an automatic code reader, as described in the following.

All modes of mobile information transmission using element codes and designed such that practically all mobile phone displays will be able to simultaneously exhibit the entire code, will hereinafter be referred to as txt element code transmissions.

### ELEMENT CODE INHERENT ADVANTAGES

The most important characteristic of the element code is that it is based on standard SMS characters and signs. Ancillary information can be added in context with txt element code transmission, increasing practical versatility:
1. The code part of the SMS message may be preceded by plain text, preferably limited to one row on the display, relating the ticket to a specific purpose. In geographical areas where there may be an abundance of mobile phones with small displays, this information may be added after the code, to ensure that the entire ticket is at once exhibited without scrolling.
2. The ticket may be followed by plain text information from sender to end user, extending if desired the total message length by using consecutive segmented separate or concatenated messages.

Further versatility can be achieved by encoding information making ticket valid for several persons ("family ticket").

Using the inherent peer-to-peer and broadcasting functionalities of short text messaging services, tickets may be easily forwarded from the initial receiver to other persons or be mass distributed by issuer. In case of unique individual tickets for one time usage, upon first presentation and usage the ticket will be struck off the register of the applicable ticket management system and will thus be barred from multiple usage. The system's aspects of a ticketing system are further described in the following.

By replacing paper tickets with txt element code tickets very considerable rationalisation effects can thus be achieved from the viewpoint of both ticket issuers and end users.

### ELEMENT CODE DESIGN

Alternative embodiments of the element code will now be described and discussed with reference o the accompanying drawings.
Figures 1-4 show examples of codes designed according to the invention
Figure 5 illustrates an element code displayed on the screen of a mobile phone
Figure 6 shows a flow diagram illustrating typical steps in element code image processing
Figure 7 illustrates a system for event ticket generation and administration

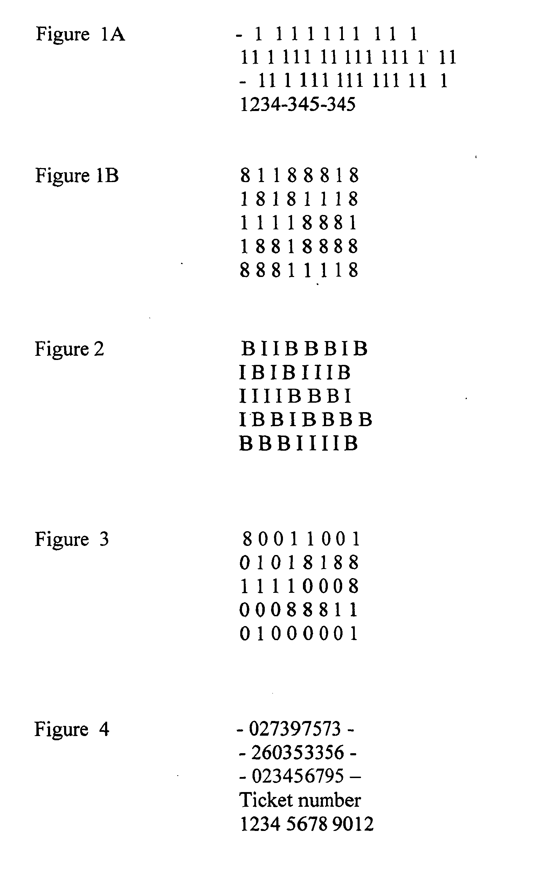

**Figures 1 - 2** illustrate binary element codes designed according to the invention.

The binary element code uses only two characters from the standard set of characters of short messaging services, including without restriction punctuation marks and spacing. The advantages of the binary code are:
- Firstly, by limiting the code to just two elements, the recognition and interpretation of the code elements in the reader and decoder is facilitated.
- Secondly, well established error detection and error correction methods, such as the Reed Solomon error correction, can be readily applied.
- Thirdly, elements whose Euler numbers are widely separated can be chosen, thereby facilitating quick recognition in the reader.

**Figure 1A** shows a binary code using as elements only the digit 1 and spacing. Experiments have shown that such a code is not optimal from a robustness point of view.

**Figure 1B** shows an improved code using the digits 1 and 8 as elements. These elements have the respective Euler numbers E = + 1 and E = -1. There are fast calculation methods for the Euler numbers, their use being advantageous from a computer vision point of view, when the task is to distinguish between symbols.

Scratches and dust particles on the display may affect the image seen by the reader and decoder, and thereby the calculated Euler number. Morphological filtration and other image improvement techniques can, however, be used prior to the calculation of the Euler number, making decoding robust under field conditions.

The advantage of using digits for the element code rather than other symbols, such as letters, is that digits are frequently printed or displayed equidistantly, which allows the code to be rendered as a perfect grid, thereby further facilitating reading and interpretation in the decoder. By using carriage return, which is supported by short text messaging, it is possible to maintain a safe margin between the elements and the display edges.

Mobile phones use various typefaces/fonts. These may be proportional or monospaced, with and without serifs, etc. As a consequence, the characters chosen as elements for the element code may be represented differently, affecting robustness of recognition.

It may therefore be advantageous to use other characters for the element code than 1 and 8.

**Figure 2** illustrates a binary element code embodiment with the elements capital "b" and capital "i". These elements have the same Euler numbers as the digits 8 and 1 and may be used alternatively. However, equidistant spacing is in this case lost.

The Figures 1 and 2 show as an example a code embodiment with spacing between the elements and with 5 rows with 8 elements in each row, rendering a 40-bit code.

Although spacing between elements facilitates robust reading and decoding, using spacing is an option but not a necessary condition according to the invention. Within the scope of the invention use of a spacing symbol supported by standard short text messaging, such as a hyphen between the elements, is allowed.

Furthermore, using carriage return is an option which facilitates interpretation, but is not a necessary condition. Experimentally, it has been verified that stable decoding can be achieved without a pre-programmed carriage return for defining row length.

A 40-bit binary code allows a practically sufficient number of combinations. Low-end mobile phones may, however, not allow 5 rows to be simultaneously displayed. With fewer rows, the combinatorial capacity may be increased by using a three element code. This is illustrated by **Figure 3**, in which the elements 8, 0 and 1 are used, having Euler numbers E = - 1, E = 0 and E = + 1, respectively. With three rows of 8 elements, the combinatorial capacity of such a code (with no elements allocated for error detection or correction) is approx. 282 billions.

According to the invention it is allowed to vary the number of code elements and to choose for the code any set of clearly discernible standard text messaging characters, preferably such that the Euler number of any two elements in the code differ by at least one unit.

An optional characteristic of the element code structure and decoding programs according to the invention is partial or full rotational invariance. In case of full rotational invariance the interpretation of the code is possible regardless of how the display is rotted around the optical axis of the reader/decoder. The rotational invariance can be achieved by, e.g., introducing suitable markers in the code.

The codes illustrated by Figures 1-3 are decoded by means of OCR techniques, which may be based on neural networks, to allow the reader to recognize the characters used for the element code, irrespective of the type of font used on the display of a particular mobile phone. This presupposes that the algorithms used be trained to recognize characters on numerous mobile phone displays under poor lightning and contrast conditions and with a possibly large not well known range of fonts, the occurrence of which may change over time. This difficulty can be overcome by the code book concept illustrated by the element code according to Figure 4.

In **Figure 4**, the first two rows of the element code comprise each 9 elements chosen from the set of digits 0-9, with the digits 1 and 8 excluded in this example. These two rows contain the encoded ticket number. The third row is the code book, which contains no encoded information, but is only used as a template to allow the code reader to recognize the set of coding characters. Using symmetry properties in the code book, for instance such that a certain digit is always at the midpoint of the code book line, further facilitates interpretation.

Practical tests on a large range of mobile phones of different generations and with widely varying display and background characteristics, have verified the robustness of the element code with a codebook. Added advantages of using a codebook are larger selection of characters which can be practically used as elements and thereby larger combinatorial capacity at a given length of code. In case of the example in Figure 4, using four digits for error detection, so that 14 digits remain for the payload of the code, the combinatorial capacity is 8 ^ 14 or approx. 4398 billions.

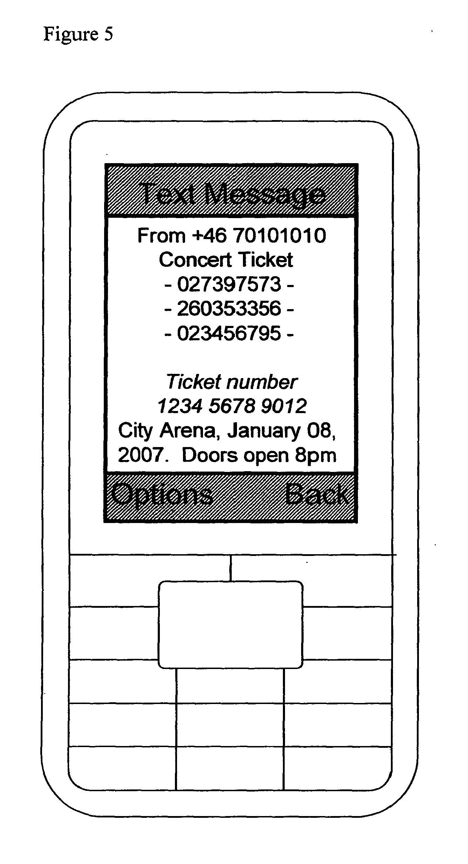

**Figure 5** shows a mobile phone displaying a txt element code message according to Fig. 4.

For the reading and interpretation of the element code a specially programmed and adapted reader/scanner is used, based on CCD or CMOS camera techniques. Reliable machine reading of codes on mobile phone displays may be difficult due to reflections, poor contrast and sometimes uneven/patchy background. Means, such as herapath/polarising screens and optimised lighting may therefore be provided in the reader/decoder to minimize said problems. However, practical tests have shown that with backlit displays of mobile phones the contrast is sufficient for reading of element codes on practically all mobile phone screens without special intrinsic lighting or polarizing measures in the reader.

The embedded decoding program may make geometric corrections for angular and rotational effects. By choice of lenses with sufficient sharpening depth effects of varying imaging distances and non-planar screens are minimized. Motion blur is controlled by high speed framing and processing and/or by differentiation methods. To better cope with the problems caused by uneven backgrounds used as a default setting on some mobile phones, binning of pixel regions may be introduced in the early steps of image processing. The image processing may include use of edge detection techniques and generalized Hough transform, computation of binary moments and orientation of connected components, etc.

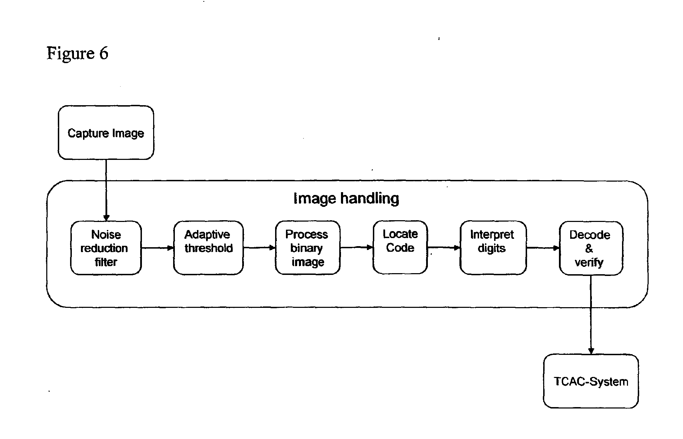

**Figure 6** illustrates typical image capture and handling steps in the element code reader, comprising
- capture of images at a sufficient speed to reduce motion blur
- image filtration to reduce noise
- use of adaptive threshold to produce a binary image
- processing of binary image to determine features of binary connected components; in particular, for the element code illustrated by Figures 4 and 5, identify components which might correspond to the dashes (or other suitable landmarks) at the beginning and end of rows
- locating code; in particular, for the element code illustrated by Figures 4 and 5, search for combinations of dashes demarcating code location; upon locating code, determine locations of individual digits
- interpretation of digits in code; in case of element code with codebook, for interpretation use correlation and matching with codebook
- decoding the ticket number and when applicable verifying by using error detection or correction techniques
- rendering the result to the pertinent Ticketing, Couponing or Access Control (TCAC-) system

The reader or a terminal connected to the reader is equipped with communication means, including but not limited to wireless communication in a local area network to a computer or server, where tickets may be checked for validity and blocked against multiple use.

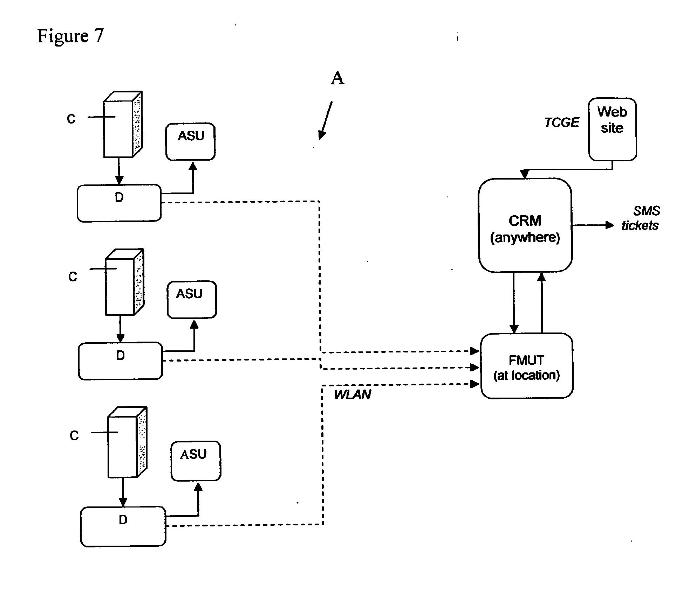

**Figure 7** illustrates an access control system A having three entrances and with element code readers C integrated into a ticketing system for event organizers, in which tickets or access passes are generated by a ticket and coupon generating engine (TCGE) downloaded over the Internet from a web site to the event organizer's customer management relation system (CRM). The CRM, which may be located far from the event site, combines tickets with any additional commercial or other information and disseminates SMS tickets to mobile phone numbers listed in its data base. The CRM communicates over the Internet with a field management unit for tickets (FMUT) located at the event site, which comprises a local server to which the CRM continuously delivers information on the numbers of tickets issued, for how many persons any ticket is valid, its validity/expiry date, etc. The FMUT stores this information in a continuously updated local data base. The FMUT also receives information from doorkeeper's terminals D on tickets read, checks their numbers against said local data base and delivers back to said terminals information on ticket validity. Thereby, multiple use of tickets is barred. The CRM can at any time request from FMUT statistics on how many and which tickets have been used in any given period of time. The WLAN allows max. 50-100 m between entrances and FMUT without repeaters.

The structure of ticket and coupon numbers and the algorithms for generating element codes, incl. methods for ticket/coupon number administration, as well as for reversible permutation or cipher coding of consecutive ticket numbers to prevent forgery, are not subject of this patent application. However, the large payload capacity and versatility of the element code concept allows various practical demands to be met. For instance, part of the payload of the element code may be used to encode information on restricted time and geographical validity of the ticket. Tickets restricted in this way can thereby be distributed and used in transportation systems without the requirement for continuous communication between the mobile element code reader and a central system for ticket validation.

An important advantage of a txt element code based ticketing system integrated into and communicating wirelessly with a data base system, is that it is equally useful on trains and other fare or fee based systems where there are no controlled gates, so that the ticket control is done either systematically by a ticket collector walking through the train or buss or occasionally by a controller making an unannounced check of tickets. The ticket number read by the element code reader will be transmitted to the central system via GPRS or 3G in the unit, and all relevant information re ticket validity can be brought from there.

The ticket collector or controller can carry the element code reader in a satchel or shoulder bag. For mobile applications the reader can preferably be lightweight and ergonomically designed such that it resembles a gun, which on its backside has a clearly visible small screen, on which ticket information is immediately displayed as soon as the muzzle of the reader gun is placed over a mobile phone display with an SMS ticket. This is much quicker than checking and clipping paper tickets and very convenient to both the traveller and the ticket collector or controller.

A similar system design as that for event tickets and access passes is applicable to couponing applications involving for instance element code based discount coupons to be presented to cashiers in retail stores.

The invention has been described with reference to its presently foreseen best modes of embodiment. However, it is clear that the invention is susceptible to changes of mode of operation and embodiment, all within the ability of persons skilled in the art and the frame of normal technical development, and within the scope of the invention as set forth in the appended claims.

## Claims

1. Method for delivering coded information using a mobile phone with a display, said mobile phone being capable of receiving and displaying short text messages containing an automatically readable element code, the elements of which are selected from a set of characters used in standard short text messaging services, **characterized in that** the elements consist of symbols which are displayed equidistantly, thereby rendering a perfect grid.

2. Method according to claim 1, **characterized in that** said element code is designed as a binary element code, using only two elements selected from a set of standard characters for short text messaging.

3. Method according to claim 1 or 2, **characterized in that** said element code is used to render ticketing, couponing and access control functions and **in that** said element code is supplemented by human readable/interpretable plain text information, such as a ticket or coupon number or commercial message.

4. Method according to any of the preceding claims, **characterized in that** means are provided for generating coded tickets, coupons or access passes, which if required may encode restrictions with respect to geographical and time validity, and disseminating these to mobile phone units preferably via, but not limited to, short text messaging networks and centres.

5. Method according to any of the preceding claims, **characterized in that** said element code comprises a code book used as a template for recognition and interpretation of the code elements by correlation and matching techniques, to facilitate interpretation and make it largely independent of fonts and other mobile phone display characteristics.

6. Apparatus for automatic reading, decoding and use of the element code according to any of the preceding claims, said apparatus comprising a camera unit and processor means for capturing an image of the display of the mobile phone exhibiting the element code, said image being processed by image handling techniques either within said camera unit or in a separate computer terminal or server communicating with said camera unit to recognize and interpret the structure and elements of the code, **characterized in that** the apparatus is able to read and decode an element code consisting of symbols which are displayed equidistantly, thereby rendering a perfect grid.

7. Apparatus according to claim 6, **characterized in that** said element code is a binary code.

8. Apparatus according to claim 6 or 7, **characterized in that** it comprises means for communicating tickets, coupons or access passes which have been either automatically or manually read off mobile phone displays to a registry for validation, for barring from multiple usage and for allowing accumulation of real time statistics on usage.

9. Apparatus according to claim 8, **characterized in that** upon control of validity or right of use of mobile tickets, coupons and access passes, the result of the control is communicated from a central registry back to the point of use of said mobile ticket, coupon or access pass and that said point of use may be a gate to an event or to a transport system, a cashiers desk or the entrance to a restricted area or facility.

10. Apparatus according to claim 19, **characterized in that** the information returned back to the point of use may include information regarding right of use of the mobile ticket for several persons, validity of ticket or coupon for use at multiple occasions or validity of an access pass for a party of visitors.
